# EUROPÄISCHE PATENTANMELDUNG

(11) **EP 3 315 052 A1**
(43) Veröffentlichungstag der Anmeldung: **02.05.2018**
(21) Anmeldenummer: 17197686.3
(22) Anmeldetag: 23.10.2017
(51) Int. Cl.: A47G 1/06, A47B 97/08, F16M 11/04, G06F 1/16, G09F 15/00

(54) **HALTERUNG ZUR BEFESTIGUNG VON WERBEPLATTEN**

(30) Priorität: 25.10.2016 DE 102016012761
(71) Anmelder: Perato GmbH, 04109 Leipzig Sachsen (DE)
(72) Erfinder: Graell, Alexander, 04463 Großpösna (DE); Edel, Robert-Michael, 04316 Leipzig (DE)
(74) Vertreter: Rothe, Silke

(57) **Zusammenfassung**

Die Erfindung betrifft eine Halterung zur Befestigung von plattenförmigen Elementen an einer Tragstruktur, insbesondere zur Befestigung von Werbeplatten an LED-Modulen für Werbebanden an Spielfeldern für Sportveranstaltungen. Aufgabe der Erfindung ist es, eine derartige Halterung zu schaffen, die für die Zuschauer unabhängig von der Bodenbeschaffenheit und/oder der notwendigen Versorgungstechnik ein gleichbleibend ansprechendes Erscheinungsbild der gesamten Werbebande gewährleistet und gleichzeitig die plattenförmigen Elemente besser gegen Umwelteinflüsse sichert. Insbesondere soll eine Halterung entwickelt werden, welche die plattenförmigen Elemente lagefixiert an Rückseiten von LED-Modulen oder anderen Verwendungen ähnlicher Bauart positioniert. Dies wird erreicht, indem die Halterung einen U-förmigen Profilträger (2) aufweist, wobei an dem in Funktionslage unteren Ende des Profilträgers (2) ein Plattenhalter (5) angeordnet ist, der durch einen Bolzen drehbar mit dem Profilträger (2) verbunden ist und einen Konturabschnitt zur Aufnahme einer Werbeplatte (1) aufweist, wobei an dem in Funktionslage oberen Ende des Profilträgers (2) ein Winkelhalter mit einem fest montierten Winkel zur Aufnahme einer Werbeplatte (1) angeordnet ist, wobei der Winkelhalter entlang der Kontur in Längsrichtung des Profilträgers (2) begrenzt verschiebbar ist, indem er einen oberen Bolzen und einen unteren Bolzen aufweist, die jeweils in einem gemeinsamen Langloch des Profilträgers (2) geführt werden, wobei der untere Bolzen des Winkelhalters mittels einer Feder mit einer Federkraft beaufschlagt wird und wobei das dem unteren Bolzen des Winkelhalters entgegengesetzte Ende dieser Feder an einem weiteren, fest am Profilträger (2) gelagerten Bolzen abgestützt ist.

## Beschreibung

Die Erfindung betrifft eine Halterung zur Befestigung von plattenförmigen Elementen an einer Tragstruktur, insbesondere zur Befestigung von Werbeplatten an LED-Modulen für Werbebanden an Spielfeldern für Sportveranstaltungen.

Spielfelder wie Fußballfelder und andere Plätze werden oftmals mit Werbebanden aus LED-Bauelementen begrenzt. Derartige Werbebanden weisen überwiegend eine Vielzahl von separaten Modulen auf, die aneinandergereiht werden. Eine diesbezüglich vorteilhafte Konstruktion ergibt sich, sofern die Module in einer Trägerstruktur mit einer ausklappbaren Bodenleiste abgestützt werden. Die ausklappbare Bodenleiste ermöglicht platzsparenden Transport und Lagerung sowie eine gute Standsicherheit für die Nutzung der Werbebande.

Die Rückseiten derartiger Module sind meist offen, so dass die sich hinter dem LED-Modul befindlichen Zuschauer die rückseitige Technik dieser Bauelemente sehen. Um das optische Erscheinungsbild für die Zuschauer zu verbessern, werden oftmals rückseitig plattenförmige Elemente mit Sponsorenwerbung auf die ausklappbare Bodenleiste gestellt und oben an das LED-Modul gelehnt. Diese Platten werden z.B. mittels Klettverschluss gegen ein Verrutschen oder Umfallen gesichert.

Das Problem hierbei ist jedoch, dass die plattenförmigen Elemente ganz überwiegend nicht zueinander ausgerichtet sind, weil der Untergrund uneben ist oder Stromkabel unterhalb der plattenförmigen Elemente zu den LED-Modulen führen. Dadurch ergibt sich zwangsläufig ein nicht befriedigendes Erscheinungsbild der gesamten Werbebande.

Aufgabe der Erfindung ist es, eine Halterung zur Befestigung von plattenförmigen Elementen an LED-Modulen für Werbebanden zu schaffen, die für die Zuschauer unabhängig von der Bodenbeschaffenheit und/oder der notwendigen Versorgungstechnik ein gleichbleibend ansprechendes Erscheinungsbild der gesamten Werbebande gewährleistet und gleichzeitig die plattenförmigen Elemente besser gegen Umwelteinflüsse sichert. Insbesondere soll eine Halterung entwickelt werden, welche die plattenförmigen Elemente lagefixiert an Rückseiten von LED-Modulen oder anderen Verwendungen ähnlicher Bauart positioniert.

Diese Aufgabe wird gelöst, indem die Halterung einen U-förmigen Profilträger aufweist, wobei an dem in Funktionslage unteren Ende des Profilträgers ein Plattenhalter angeordnet ist, der durch einen Bolzen drehbar mit dem Profilträger verbunden ist und einen Konturabschnitt zur Aufnahme einer Werbeplatte aufweist. Weiterhin ist am in Funktionslage oberen Ende des Profilträgers ein Winkelhalter mit einem fest montierten Winkel zur Aufnahme einer Werbeplatte angeordnet, der entlang der Kontur in Längsrichtung des Profilträgers begrenzt verschiebbar ist. Hierfür weist der Winkelhalter einen oberen Bolzen und einen unteren Bolzen auf, die jeweils in einem gemeinsamen Langloch des Profilträgers geführt werden. Der untere Bolzen des Winkelhalters wird mittels einer Feder mit einer Federzugkraft beaufschlagt, wobei das Federende, das dem unteren Bolzen des Winkelhalters entgegengesetzt angeordnet ist, mit einem weiteren und fest am Profilträger gelagerten Bolzen verbunden ist.

Eine vorteilhafte Ausgestaltung ergibt sich, indem am Plattenhalter in einem Winkel von etwa 10° zur Senkrechten eine Aussparung zur Aufnahme der Werbeplatte angeordnet ist. Somit kann diese Werbeplatte in einem Winkel von etwa 10 Grad zur Senkrechten des zugeordneten LED-Moduls eingesetzt werden. Alternativ kann an dem in Funktionslage unteren Ende des Profilträgers auch ein Winkel zur Aufnahme einer Werbeplatte angeordnet werden.

Eine weitere Ausgestaltung sieht vor, dass der Profilträger für eine Montage mit einem benachbarten Profilträger auf seiner zur Werbeplatte entgegengesetzt angeordneten Rückseite Bolzen als Verbindungselemente aufweist. Als Alternative wird vorgeschlagen, dass der Profilträger für eine Montage an Stabmattenzäunen oder ähnlichen Gestellen auf seiner zur Werbeplatte entgegengesetzt angeordneten Rückseite Gewindestifte als Verbindungselemente aufweist. Schließlich ist es auch möglich, dass der Profilträger für eine direkte Montage an Wänden oder ähnlichen Tragstrukturen auf seiner zur Werbeplatte entgegengesetzt angeordneten Rückseite ohne Bolzen oder Gewindestifte ausgestaltet ist.

Mit dieser technischen Lösung ist eine Halterung verfügbar, mit der plattenförmige Elemente lagefixiert an Rückseiten von LED-Modulen oder anderen Verwendungen ähnlicher Bauart positioniert werden können. Derartige Konstruktionen sind für verschiedenartige Nutzung geeignet, wobei als eine bevorzugte Anwendung die Befestigung plattenförmiger Elemente an LED-Modulen für Werbebanden von Fußballfeldern betrachtet wird. Hierbei wird für die Zuschauer und somit auch für die Sponsoren unabhängig von Bodenbeschaffenheit bzw. eventuell notwendiger Versorgungstechnik ein gleichbleibend gutes Erscheinungsbild der gesamten Werbebande gewährleistet. Gleichzeitig sind die plattenförmigen Elemente besser gegen Umwelteinflüsse gesichert, indem Beschädigungen durch Umfallen und dergleichen weitgehend ausgeschlossen sind. Ein weiterer Vorteil besteht darin, dass die jeweiligen plattenförmigen Elemente ohne Werkzeuge montiert und demontiert werden können. Somit ergeben sich geringe Umrüstzeiten und auch ein schneller Wechsel zwischen verschiedenen Werbeinhalten ist problemlos möglich.

Nachfolgend wird ein Ausführungsbeispiel der Erfindung anhand der Zeichnung näher erläutert. Es zeigen:

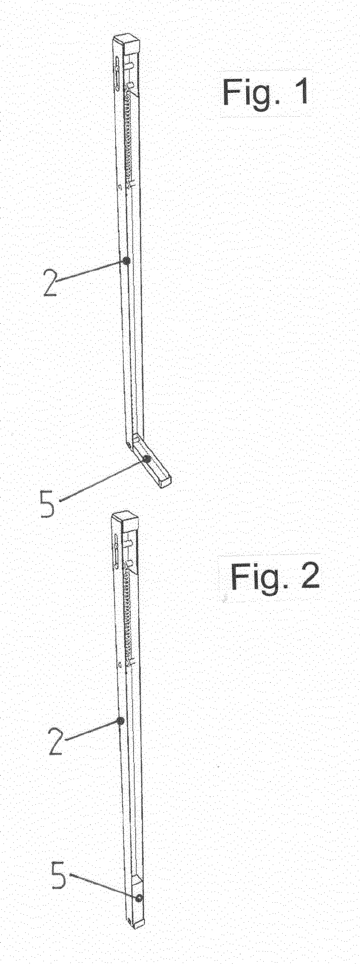

- Fig. 1: die Halterung in perspektivischer Ansicht mit ausgeklapptem Plattenhalter
- Fig. 2: die Halterung in perspektivischer Ansicht mit eingeklapptem Plattenhalter

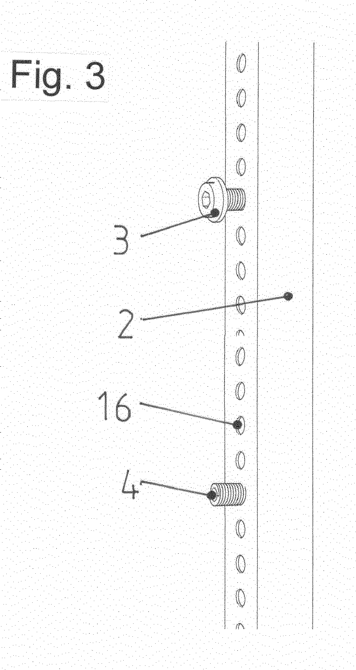

- Fig. 3: ein Detail der rückseitigen Ausgestaltung des Profilträgers

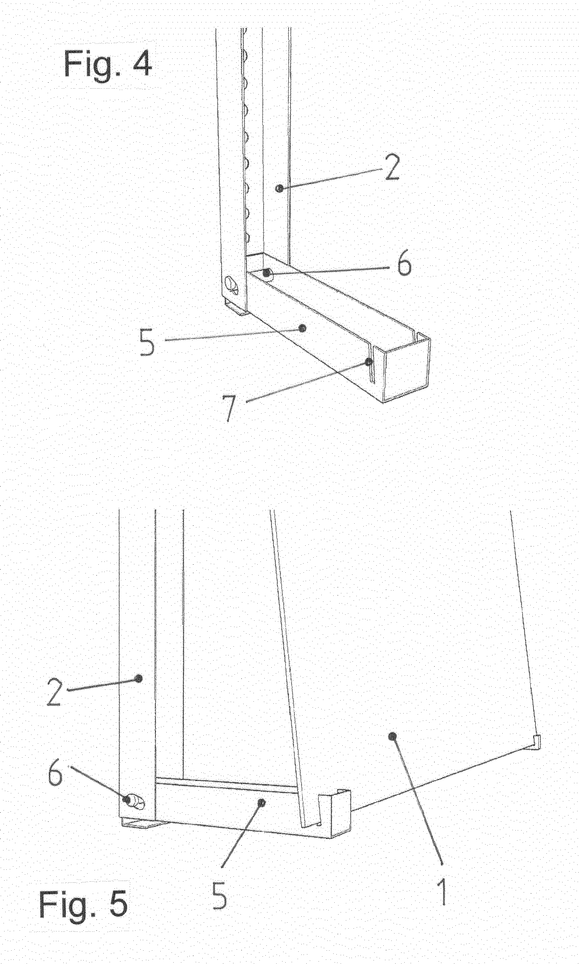

- Fig. 4: im Detail den unteren Abschnitt des Profilträgers mit ausgeklapptem Plattenhalter
- Fig. 5: das Detail gemäß Fig. 4 mit zugeordneter Werbeplatte

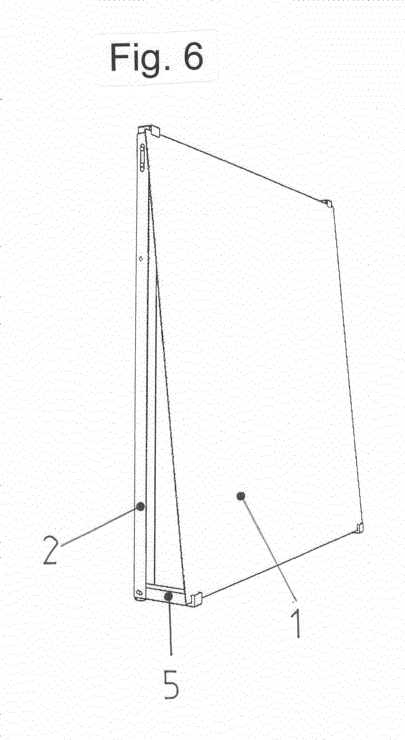

- Fig. 6: eine Gesamtansicht der Halterung mit zugeordneter Werbeplatte

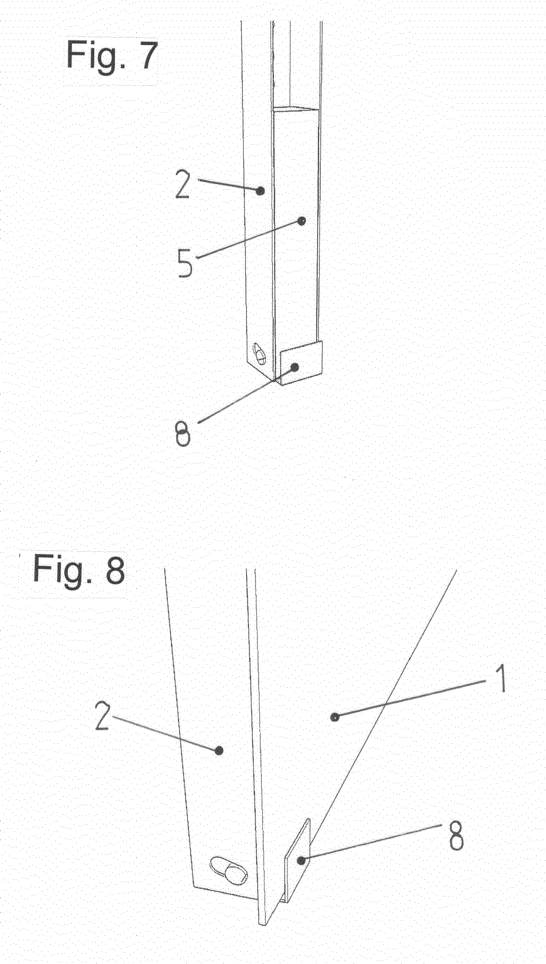

- Fig. 7: im Detail den unteren Abschnitt des Profilträgers mit eingeklapptem Plattenhalter
- Fig. 8: das Detail gemäß Fig. 7 mit zugeordneter Werbeplatte

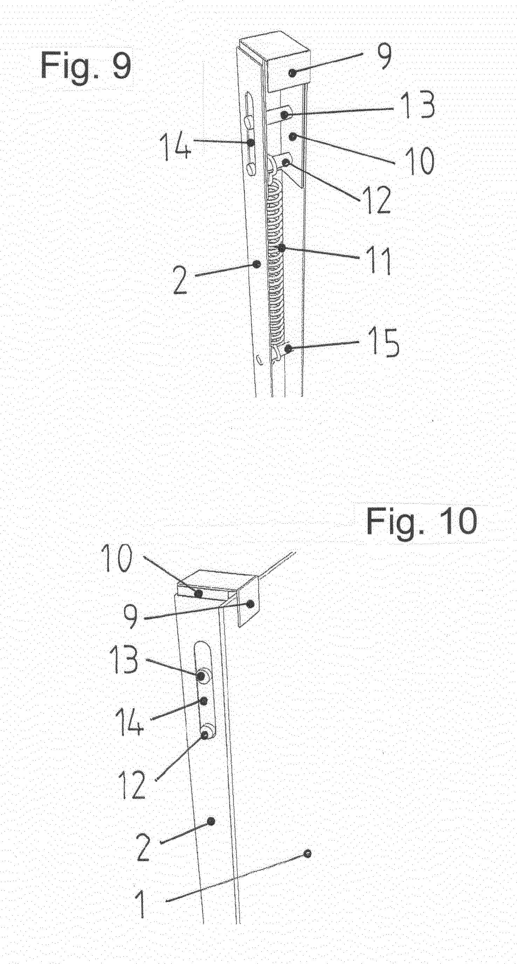

- Fig. 9: im Detail den oberen Abschnitt des Profilträgers
- Fig. 10: das Detail gemäß Fig. 9 mit zugeordneter Werbeplatte

Die in der Zeichnung dargestellte Halterung ist insbesondere zur Befestigung von Werbeplatten 1 an LED-Modulen für Werbebanden an Spielfeldern für Sportveranstaltungen konzipiert. Die Tragstruktur dieser Halterung bildet ein Profilträger 2, der aus Metall besteht und U-förmig gebogen ist. An diesem Profilträger 2 sind rückseitig zwei Bolzen 3 und 4 befestigt, über die der Profilträger 2 in vorhandene Bohrungen am Grundgestell eines LED-Moduls eingehängt werden kann.

Am unteren Ende des Profilträgers 2 befindet sich ein Plattenhalter 5. Dieser Plattenhalter 5 besteht ebenfalls aus einem Profil, welches durch einen Bolzen 6 drehbar mit dem Profilträger 2 verbunden ist.

Wird der Plattenhalter 5 ausgeklappt, kann die Werbeplatte 1 in eine Aussparung 7 des Plattenhalters 5 in einem Winkel von etwa 10 Grad zur Senkrechten des LED-Moduls eingesetzt werden. Alternativ kann der Plattenhalter 5 eingeklappt bleiben, sofern am unteren Ende des Plattenhalters 5 ein Winkel 8 zur Aufnahme der Werbeplatte 1 vorgesehen ist. In diesem Fall steht die Werbeplatte 1 senkrecht zum LED-Modul.

Sobald die Werbeplatte 1 in eine der beiden Positionen am Plattenhalter 5 eingesetzt ist, wird diese fest an das obere Ende des Profilträgers 2 und somit an einem oberen Winkel 9 angelehnt. Nun kann der Winkel 9, der fest mit einem Winkelhalter 10 verbunden ist, gegen die Kraft einer Feder 11 nach oben gezogen und mit der Werbeplatte 1 verriegelt werden.

Der Winkelhalter 10 besteht ebenfalls aus einem Profil, welches locker im Profilträger 2 geführt wird. Die Führung des Winkelhalters 10 übernehmen zwei Bolzen 12 und 13, die wiederum durch ein Langloch 14 im Profilträger 2 geführt werden. Durch die somit gesicherte Führung des Winkelhalters 10 im Profilträger 2 ist der Winkelhalter 10 in seinem Weg begrenzt und kann nicht aus dem Profilträger 2 heraus fallen.

Der untere Bolzen 12 des Winkelhalters 10 ist durch die vorgespannte Feder 11 mit einem weiteren, nochmals unterhalb angeordneten Bolzen 15 verbunden. Dieser Bolzen 15 ist fest mit dem Profilträger 2 verbunden.

Durch die kraft- und formschlüssige Verbindung der Werbeplatten 1 mit dem LED-Modul wird die Werbeplatte 1 in definierter Höhe über dem Boden gehalten.

In der Rückansicht sind die Montagebohrungen 16 zu sehen an denen die Halterung jeweils an einer Wand oder einem LED-Modul montiert wird. Über die Montagebohrungen 16 kann das jeweils verwendete Befestigungselement (Schlossschraube, Holzschraube, Winkel, Bolzen usw.) in Abhängigkeit der konkreten Montage- oder Anwendungsbedingungen befestigt werden.

Durch den Austausch der rückseitigen Bolzen 3; 4 gegen Gewindestifte, kann die Halterung auch an Stabmattenzäunen oder anderen Gestellen befestigt werden, um Werbeplatten in verschiedenen Größen zu halten. Entfernt man die rückseitigen Bolzen oder Gewindestifte, so kann diese Halterung direkt an Wänden montiert werden, wobei diese Varianten nicht dargestellt sind. Stets ist ein werkzeugloses Ein- und Aushängen der Werbeplatten 1 möglich, was dem Nutzer eine sehr große Flexibilität ermöglicht. Demzufolge ist diese Halterung vorteilhaft für Montagen an Wänden, Gestellen, Holzkonstruktionen und Metallrahmen geeignet. Dabei kann die Halterung so ausgeführt werden, dass unterschiedlich hohe Werbeplatten 1 verspannt werden können, beispielsweise mit einer Höhe von 500 bis 1000 mm, indem man die Halterung stufenlos auf die entsprechend benötigte Höhe einstellt.

### Bezugszeichenliste

- 1: Werbeplatte
- 2: Profilträger
- 3: Bolzen am Profilträger
- 4: Bolzen am Profilträger
- 5: Plattenhalter
- 6: Bolzen für Befestigung des Plattenhalters
- 7: Aussparung am Plattenhalter
- 8: Winkel am Profilträger für Werbeplatte
- 9: oberer Winkel am Profilträger
- 10: Winkelhalter
- 11: Feder
- 12: unterer Bolzen am Winkelhalter
- 13: oberer Bolzen am Winkelhalter
- 14: Langloch im Profilträger
- 15: Bolzen für Feder am Profilträger
- 16: Montagebohrung

## Patentansprüche

1. Halterung zur Befestigung von plattenförmigen Elementen an einer Tragstruktur, insbesondere zur Befestigung von Werbeplatten an LED-Modulen für Werbebanden an Spielfeldern für Sportveranstaltungen, **dadurch gekennzeichnet,**
**dass** die Halterung einen U-förmigen Profilträger (2) aufweist, wobei an dem in Funktionslage unteren Ende des Profilträgers (2) ein Plattenhalter (5) angeordnet ist, der durch einen Bolzen (6) drehbar mit dem Profilträger (2) verbunden ist und einen Konturabschnitt zur Aufnahme einer Werbeplatte (1) aufweist, wobei an dem in Funktionslage oberen Ende des Profilträgers (2) ein Winkelhalter (10) mit einem fest montierten Winkel (9) zur Aufnahme einer Werbeplatte (1) angeordnet ist, wobei der Winkelhalter (10) entlang der Kontur in Längsrichtung des Profilträgers (2) begrenzt verschiebbar ist, indem er einen oberen Bolzen (13) und einen unteren Bolzen (12) aufweist, die jeweils in einem gemeinsamen Langloch (14) des Profilträgers (2) geführt werden, wobei der untere Bolzen (12) des Winkelhalters (10) mittels einer Feder (11) mit einer Federkraft beaufschlagt wird und wobei das dem unteren Bolzen (12) des Winkelhalters (10) entgegengesetzte Ende dieser Feder (11) an einem weiteren, fest am Profilträger (2) gelagerten Bolzen (15) abgestützt ist.

2. Halterung nach Anspruch 1, **dadurch gekennzeichnet,**
**dass** am Plattenhalter (5) in einem Winkel von etwa 10° zur Senkrechten eine Aussparung (7) zur Aufnahme der Werbeplatte (1) angeordnet ist.

3. Halterung nach Anspruch 1, **dadurch gekennzeichnet,**
**dass** an dem in Funktionslage unteren Ende des Profilträgers (2) ein Winkel (8) zur Aufnahme einer Werbeplatte (1) angeordnet ist.

4. Halterung nach Anspruch 1, **dadurch gekennzeichnet,**
**dass** der Profilträger (2) für eine Montage mit einem benachbarten Profilträger (2) auf seiner zur Werbeplatte (1) entgegengesetzt angeordneten Rückseite Bolzen (3; 4) als Verbindungselemente aufweist.

5. Halterung nach Anspruch 1, **dadurch gekennzeichnet,**
**dass** der Profilträger (2) für eine Montage an Stabmattenzäunen oder ähnlichen Gestellen auf seiner zur Werbeplatte (1) entgegengesetzt angeordneten Rückseite Gewindestifte als Verbindungselemente aufweist.

6. Halterung nach Anspruch 1, **dadurch gekennzeichnet,**
**dass** der Profilträger (2) für eine direkte Montage an Wänden oder ähnlichen Tragstrukturen auf seiner zur Werbeplatte (1) entgegengesetzt angeordneten Rückseite ohne Bolzen oder Gewindestifte ausgestaltet ist.
